# EUROPÄISCHE PATENTSCHRIFT

(11) **EP 3 256 497 B1**
(45) Veröffentlichungstag und Bekanntmachung des Hinweises auf die Patenterteilung: **19.09.2018**
(21) Anmeldenummer: 16704193.8
(22) Anmeldetag: 11.02.2016
(51) Int. Cl.: C08F 218/08, C08F 2/00, C08F 2/22, C08F 2/24, B01J 19/02, C08F 2/32, C08F 210/02

(54) **VERFAHREN ZUR POLYMERISATION VON ETHYLENISCH UNGESÄTTIGTEN MONOMEREN**
METHOD FOR POLYMERISING ETHYLENICALLY UNSATURATED MONOMERS
PROCÉDÉ DE POLYMÉRISATION DE MONOMÈRES ÉTHYLÉNIQUEMENT INSATURÉS

(30) Priorität: 12.02.2015 DE 102015202580
(43) Veröffentlichungstag der Anmeldung: 20.12.2017
(73) Patentinhaber: Wacker Chemie AG, 81737 München (DE)
(72) Erfinder: BABAR, Muhammad, 84489 Burghausen (DE)
(74) Vertreter: Schuderer, Michael
(86) Internationale Anmeldenummer: PCT/EP2016/052889
(87) Internationale Veröffentlichungsnummer: WO 2016/128502

(56) Entgegenhaltungen:
- EP-A2- 0 062 230
- WO-A1-03/085003
- US-A- 5 147 455

## Beschreibung

Die Erfindung betrifft ein Verfahren zur Polymerisation von ethylenisch ungesättigten Monomeren mittels radikalisch initiierter Emulsionspolymerisation in wässerigem Medium in einem Polymerisationsreaktor, wobei dessen Innenwände, und gegebenenfalls dessen Einbauten, vor der Befüllung des Reaktors, mittels Auftragung eines Ablagerungsverhinderungsmittel beschichtet werden.

Bei der Herstellung von Vinylacetat-Homo- und Copolymerisaten mittels radikalisch initiierter Emulsionspolymerisation in Wasser kommt es zur Ablagerung von dabei gebildetem Polymerisat an den Innenwänden und an den Einbauten des Polymerisationsreaktors. Diese Ablagerungen behindern die Polymerisation, da aufgrund des Belags der Wärmeaustausch über die Reaktorwand reduziert wird, und die Kühlung des Reaktors erschwert wird. Zusätzlich können kleine Stücke des Wandbelags abgelöst werden und das Produkt der Polymerisation verunreinigen. Um diese Nachteile zu beseitigen, müsste der Polymerisationsreaktor nach jedem Produktionszyklus von den Ablagerungen gereinigt werden. Diese würde jedoch zu einer deutlichen Verlängerung der Polymerisationszeiten führen und damit die Wirtschaftlichkeit des Polymerisationsverfahrens verschlechtern.

Aus dem Stand der Technik ist bekannt, die Innenwände des Polymerisationsreaktors sowie die Einbauten im Polymerisationsreaktor, wie Rührer oder Kühleinrichtungen oder Dosiervorrichtungen, mit einem Ablagerungsverhinderungsmittel (Antifouling Agent)zu beschichten.

In der EP 0 052 421 A1 wird zur Verhinderung von Ablagerungen bei der Polymerisation von Vinylchlorid empfohlen, als Ablagerungsverhinderungsmittel Kondensationsprodukte von 1-Naphtol und Formaldehyd in alkalischer, wässeriger Lösung oder in organischer Lösung einzusetzen. Zur Verbesserung der Anhaftung dieses Mittels an der Reaktorwand wird die Zugabe von Schutzkolloid, beispielsweise von teilhydrolisiertem Polyvinylalkohol, zur Lösung des Ablagerungsverhinderungsmittels empfohlen. Nachteilig an diesen Kondensationsprodukten ist deren dunkle Färbung.

Zur Aufhellung der Färbung werden in der WO 97/08210 A1 Kondensationsprodukte von hydroxysubstituierten Naphtalinverbindungen und Hydroxymethansulfinsäure- oder Hydroxymethansulfonsäure-Salzen als Ablagerungsverhinderungsmittel empfohlen. Diese Mittel werden mit Wasserdampf an die Reaktorwände gesprüht, wobei die Anhaftung umso besser sein soll, je höher die Temperatur des Wasserdampfes ist.

Zur Vermeidung der dunklen Färbung des Ablagerungsverhinderungsmittels wird in der WO 96/35723 A1 ein Kondensationsprodukt empfohlen, welches mittels Kondensation eines Gemisches aus einem 1-Naphthol und einem Sulfoxylat, vorzugsweise einem Natriumhydroxymethansulfinat, erhalten wird.

In der WO 96/35724 A1 wird beschrieben, dass zur Verbesserung der Adhäsion des in der WO 96/35723 A1 genannten Ablagerungsverhinderungsmittels dieses mittels eines Wasserdampfsprays bei möglichst hoher Temperatur aufgesprüht werden soll.

In der WO 2013/053895 A1 wird empfohlen zur Verbesserung der Adhäsion der als Ablagerungsverhinderungsmittel eingesetzten Kondensationsprodukte diese im Gemisch mit einem Acrylsäureesterpolymerisat auf die Reaktorwand zu versprühen.

Die WO 98/24820 A1 empfiehlt zur Unterdrückung von Belagsbildung bei Polymerisationsprozessen von Vinylchlorid oder von Vinylacetat Kondensationsprodukte von einem Aldehyd, einer Phenolverbindung und einer hydroxysubstituierten aromatischen Carbonsäure in Form deren wässerigen Lösung. In der WO 03/085003 A1 wird empfohlen die Anhaftung dieser Kondensationsprodukte an der Innenwand des Polymerisationsreaktors dadurch zu verbessern, indem der pH-Wert der Lösung auf einen pH-Wert von weniger als 5 eingestellt wird. Dazu wird in der Praxis die wässerige Lösung des Kondensationsprodukts mit einer wässerigen Säurelösung inline in einer Rohrzuleitung zum Polymerisationsreaktor vermischt, und das Gemisch im Reaktor auf die Wände gesprüht. Nachteilig ist, dass es dabei zur vorzeitigen Agglomeration in der Rohrleitung kommen kann.

Der Erfindung lag die Aufgabe zugrunde, ein Verfahren zur Verfügung zu stellen, mit welchem das Ablagerungsverhinderungsmittel schnell an der Wand ausfällt und einen Film bildet, und das Ablaufen des Ablagerungsverhinderungsmittel von der Reaktorwand eingeschränkt wird, und mit welchem sich die Haftung des Ablagerungsverhinderungsmittels an der Reaktorwand verbessern lässt, ohne dass dabei die obengenannten Nachteile resultieren.

Gegenstand der Erfindung ist ein Verfahren zur Polymerisation von ethylenisch ungesättigten Monomeren mittels radikalisch initiierter Emulsionspolymerisation in wässerigem Medium in einem Polymerisationsreaktor, wobei dessen Innenwände, und gegebenenfalls dessen Einbauten, vor der Befüllung des Reaktors, mittels Auftragung eines Ablagerungsverhinderungsmittel beschichtet werden, dadurch gekennzeichnet, dass die mit Ablagerungsverhinderungsmittel zu beschichtenden Oberflächen mit einer Säurelösung behandelt werden.

Geeignete Ablagerungsverhinderungsmittel sind solche, welche bei der Behandlung mit einer Säurelösung präzipitieren, beispielsweise die Kondensationsprodukte, welche oben als Stand der Technik diskutiert worden sind. Beispiele sind die Kondensationsprodukte von Formaldehyd mit Naphtolverbindungen wie 1-Naphtol oder 1,3-Dihydroxynaphtalin oder 1,5-Dihydroxynaphtalin oder 1,7-Dihydroxynaphtalin (EP 0 052 421 A1), oder die Kondensationsprodukte aus einer Naphtolverbindung wie 1-Naphtol und einem Sulfoxylat wie Natriumhydroxymethansulfinat (WO 97/08210 A1), oder die Kondensationsprodukte aus einer Naphtolverbindung wie 1-Naphtol und einem Sulfoxylat, welches mittels Reaktion zwischen Aldehyd und Hydrosulfit erhalten wurde (WO 96/035723 A1), oder die Kondensationsprodukte aus einer Naphtolverbindung wie 1-Naphtol und einem Aldehyd wie Formaldehyd und einer aromatischen Carbonsäure, die am aromatischen Kern hydroxyliert ist, wie Hydroxybenzoesäure (WO 98/24820 A1). Solche Kondensationsprodukte sind auch im Handel erhältlich, beispielsweise unter dem Markennamen Noxol^{R} von der Firma AkzoNobel oder unter dem Markennamen Evicas^{R} von der Firma INEOS.

Die Ablagerungsverhinderungsmittel werden in Form deren wässerigen Lösung appliziert. Im Allgemeinen enthält die wässerige Lösung 0,1 bis 20 Gew.-%, vorzugsweise 1 bis 10 Gew.-% Ablagerungsverhinderungsmittel. Die wässerige Lösung des Ablagerungsverhinderungsmittels wird vorzugsweise mit Wasserdampf versprüht.

Im Allgemeinen wird die wässerige Lösung des Ablagerungsverhinderungsmittels in einer solchen Menge appliziert, dass die behandelten Oberflächen im Reaktor mit einer Menge von 0,1 bis 10,0 g/m² des Ablagerungsverhinderungsmittels beschichtet sind. Die Applikation der wässerigen Lösung des Ablagerungsverhinderungsmittels kann dazu in einem Schritt oder in mehreren Schritten erfolgen, vorzugsweise wird die wässerige Lösung des Ablagerungsverhinderungsmittels ein bis drei Mal aufgetragen.

Bei dem erfindungsgemäßen Verfahren wird so vorgegangen, dass vor der Befüllung des Reaktors mit den Bestandteilen des Polymerisationsansatzes und vor oder nach der Applikation des Ablagerungsverhinderungsmittels, die Wände des Polymerisationsreaktors und gegebenenfalls die Einbauten des Polymerisationsreaktors, beispielsweise Rührer, Kühleinrichtungen oder Zuleitungen, mit einer wässerigen Lösung einer anorganischen oder organischen Säure behandelt werden.

Geeignete Säuren sind anorganische oder organische Säuren mit einem pKs-Wert von pKs < 5. Beispielsweise anorganische Säuren wie Salzsäure, Schwefelsäure oder Salpetersäure, oder organische Säuren wie Ameisensäure, Essigsäure, Ascorbinsäure, Zitronensäure, Weinsäure oder Oxalsäure. Bevorzugt werden Ascorbinsäure oder Zitronensäure. Die Konzentration der wässerigen Säurelösung hängt vom pKs-Wert der jeweiligen Säure ab. Im Allgemeinen beträgt die Konzentration der wässerigen Lösung der Säure 0,1 bis 20 Gew.-%. Bei Ascorbinsäure oder Zitronensäure beträgt die Konzentration der wässerigen Lösung vorzugsweise 5 bis 10 Gew.-%.

Zur Auftragung der Säurelösung auf die damit zu behandelnden Oberflächen wird die Säurelösung mit Wasserdampf versprüht. Die Säurelösung wird in einer solchen Menge versprüht, dass die mit dem Ablagerungsverhinderungsmittel zu behandelnden Flächen möglichst vollständig mit der wässrigen Lösung benetzt werden. Im Allgemeinen beträgt die Menge der zu versprühenden Säurelösung von 1 bis 100,0 g/m².

Vorzugsweise werden die Reaktorwände vor der Behandlung mit der wässerigen Säurelösung oder der Auftragung des Ablagerungsverhinderungsmittels auf eine Temperatur von 40°C bis 100°C, besonders bevorzugt 50°C bis 70°C beheizt.

Man kann dabei so vorgehen, dass zunächst die Säurelösung auf die zu beschichtenden Flächen aufgetragen wird, und anschließend das Ablagerungsverhinderungsmittel. Man kann auch umgekehrt vorgehen, und zunächst das Ablagerungsverhinderungsmittel auftragen, und anschließend die Säurelösung. In einer bevorzugten Ausführungsform wird so vorgegangen, dass zunächst die wässerige Säurelösung aufgesprüht wird, und anschließend das Ablagerungsverhinderungsmittel auf die zu behandelnde Fläche aufgesprüht wird. Nach dem Auftragen des Ablagerungsverhinderungsmittels kann man den dabei gebildeten Belag bis zu 30 Minuten verfestigen lassen.

Die Auftragung der wässerigen Säurelösung und/oder des Ablagerungsverhinderungsmittel kann in den genannten Ausführungsformen jeweils wiederholt werden. Vorzugsweise wird die Sequenz ein bis drei Mal durchgeführt.

Anschließend wird der Reaktor mit den Edukten für die Polymerisation beladen.

Das Verfahren eignet sich zur Verhinderung der Belagsbildung bei der Polymerisation von einem oder mehreren ethylenisch ungesättigten Monomeren ausgewählt aus der Gruppe enthaltend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine oder Diene, Vinylaromaten oder Vinylhalogenide.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9^{R} oder VeoVa10^{R} (Handelsnamen der Firma Momentive). Besonders bevorzugt ist Vinylacetat.

Bevorzugte Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat.

Bevorzugte Olefine oder Diene sind Ethylen, Propylen und 1,3-Butadien. Bevorzugte Vinylaromaten sind Styrol und Vinyltoluol. Ein bevorzugtes Vinylhalogenid ist Vinylchlorid.

Gegebenenfalls können noch 0,05 bis 50 Gew.-%, vorzugsweise 0,1 bis 10 Gew.-%, bezogen auf das Gesamtgewicht der Monomere, Hilfsmonomere copolymerisiert werden. Beispiele für Hilfsmonomere sind ethylenisch ungesättigte Mono- und Dicarbonsäuren, ethylenisch ungesättigte Carbonsäureamide, ethylenisch ungesättigte Sulfonsäuren bzw. deren Salze, vorvernetzende Comonomere wie mehrfach ethylenisch ungesättigte Comonomere, nachvernetzende Comonomere wie N-Methylolacrylamid, epoxidfunktionelle Comonomere, siliciumfunktionelle Comonomere.

Das Verfahren eignet sich vorzugsweise zur Polymerisation von Vinylacetat und gegebenenfalls weiteren mit Vinylacetat copolymerisierbaren Comonomeren. Beispiele für vorzugsweise einzusetzende Momomere sind Vinylacetat, Mischungen von Vinylacetat mit Ethylen, Mischungen von Vinylacetat mit Ethylen und einem oder mehreren weiteren Vinylestern, Mischungen von Vinylacetat mit einem oder mehreren weiteren Vinylestern, Mischungen von Vinylacetat mit Ethylen und (Meth)-Acrylsäureester, Mischungen von Vinylacetat mit Ethylen und Vinylchlorid, Mischungen von Vinylchlorid und Ethylen und gegebenenfalls einem oder mehreren weiteren Vinylestern.

Besonders bevorzugt wird Vinylacetat.
Besonders bevorzugt werden auch Mischungen enthaltend Vinylacetat und 1 bis 40 Gew.-% Ethylen, bezogen auf das Gesamtgewicht der Monomere.
Besonders bevorzugt werden auch Mischungen enthaltend Vinylacetat und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie Veo-Va9^{R}, VeoVa10^{R}, VeoVa11^{R}, und gegebenenfalls 1 bis 40 Gew.-% Ethylen, wobei die Angaben in Gew.-% jeweils auf das Gesamtgewicht der Monomere bezogen sind und sich jeweils auf 100 Gew.-% aufaddieren.
Besonders bevorzugt werden auch Mischungen enthaltend Vinylacetat und 1 bis 60 Gew.-% (Meth)-Acrylsäureester von unverzweigten oder verzweigten Alkoholen mit 1 bis 15 C-Atomen, insbesondere Methylmethacrylat, Methylacrylat, n-Butylacrylat oder 2-Ethylhexylacrylat, welche gegebenenfalls noch 1 bis 30 Gew.-% Vinyllaurat oder Vinylester einer alpha-verzweigten Carbonsäure mit 5 bis 13 C-Atomen, sowie gegebenenfalls noch 1 bis 40 Gew.-% Ethylen enthalten können, wobei die Angaben in Gew.-% jeweils auf das Gesamtgewicht der Monomere bezogen sind und sich jeweils auf 100 Gew.-% aufaddieren.
Besonders bevorzugt werden auch Mischungen enthaltend 1 bis 60 Gew.-% Vinylchlorid, 1 bis 40 Gew.-% Ethylen, und gegebenenfalls ein oder mehrere Vinylester mit 1 bis 12 C-Atomen im Carbonsäurerest wie Vinylacetat, Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R}, wobei die Angaben in Gew.-% jeweils auf das Gesamtgewicht der Monomere bezogen sind, und sich jeweils auf 100 Gew.-% aufaddieren.
Die als besonders bevorzugt genannten Monomere und Mischungen von Monomeren können jeweils noch die genannten Hilfsmonomere in den genannten Mengen enthalten, wobei sich die Angaben in Gew.-% auf jeweils 100 Gew.-% aufaddieren.

Bei der Herstellung nach dem Emulsionspolymerisationsverfahren beträgt die Polymerisationstemperatur vorzugsweise zwischen 40°C und 120°C, besonders bevorzugt zwischen 60°C und 90°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Initiierung der Polymerisation erfolgt vorzugsweise mit den für die Emulsionspolymerisation gebräuchlichen wasserlöslichen Initiatoren oder Redox-Initiator-Kombinationen. Beispiele für geeignete Oxidationsinitiatoren sind die Natrium-, Kalium- und Ammoniumsalze der Peroxodischwefelsäure und Wasserstoffperoxid. Die genannten Initiatoren werden im Allgemeinen in einer Menge von 0,01 bis 2,0 Gew.-%, bezogen auf das Gesamtgewicht der Monomere, eingesetzt. Geeignete Reduktionsmittel sind beispielsweise Natriumhydroxymethansulfinat, Weinsäure und (Iso-)Ascorbinsäure. Die Reduktionsmittelmenge beträgt vorzugsweise 0,015 bis 3 Gew.-%, bezogen auf das Gesamtgewicht der Monomere. Die genannten Oxidationsmittel können auch alleinig als thermische Initiatoren eingesetzt werden.

Die Polymerisation erfolgt in Gegenwart von Schutzkolloiden und/oder Emulgatoren. Bevorzugte Schutzkolloide für die Polymerisation sind Polyvinylalkohole, Polysaccharide in wasserlöslicher Form wie Stärken oder Cellulosen und deren Derivate. Besonders bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung, von 1 bis 30 mPas (Methode nach Höppler bei 20°C, DIN 53015) verwendet.

Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Im Allgemeinen werden das Schutzkolloid und/oder der Emulgator in einer Menge von 1 bis 5 Gew.-%, bezogen auf das Gesamtgewicht der Monomere eingesetzt.

Die Polymerisation kann diskontinuierlich als Batchprozess oder Semibatchprozess oder kontinuierlich betrieben werden. Die Monomere können insgesamt vorgelegt oder zudosiert werden. Es werden vorzugsweise 0 bis 100 Gew.-%, besonders bevorzugt 2 bis 50 Gew.-%, der Monomere vorgelegt, bezogen auf das Gesamtgewicht der Monomere, und die verbleibende Restmenge an Monomeren wird zu einem späteren Zeitpunkt während der Emulsionspolymerisation zudosiert. Die Dosierungen können separat (räumlich und zeitlich) durchgeführt werden, oder die zu dosierenden Komponenten können alle oder teilweise voremulgiert dosiert werden. Die Schutzkolloide und/oder Emulgatoren können ganz oder teilweise zudosiert, ganz oder teilweise vorgelegt werden. Die Dauer der Emulsionspolymerisation bemisst sich beginnend mit der Initiierung der Emulsionspolymerisation bis zu dem Zeitpunkt, zu dem der Umsatz der insgesamt eingesetzten ethylenisch ungesättigten Monomere vorzugsweise 85 Gew.-% bis 95 Gew.-% beträgt.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die damit erhältlichen wässerigen Polymerdispersionen haben einen Feststoffgehalt von 30 bis 75 Gew.-%, vorzugsweise von 50 bis 60 Gew.-%.

Aus den wässerigen Polymerdispersionen können in Wasser redispergierbare Polymerpulver erhalten werden. Zur Herstellung der in Wasser redispergierbaren Polymerpulver werden die wässerigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung.

Die wässerigen Polymerdispersionen bzw. die daraus erhältlichen in Wasser redispergierbaren Dispersionspulver können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben und zur Betonmodifizierung. Ferner als Bindemittel für Beschichtungsmittel und Klebemittel oder als Beschichtungs- bzw. Bindemittel für Textilien und Papier.

Mit dem erfindungsgemäßen Verfahren lässt sich sowohl bei diskontinuierlicher als auch bei kontinuierlicher Fahrweise die Bildung von Ablagerungen im Inneren des Polymerisationsreaktors wirksam verringern. Ablagerungen an den Reaktorinnenwänden machen sich vor allem auch dadurch bemerkbar, dass der Wärmetransport über den Reaktormantel eingeschränkt wird. Das hat zur Folge das zur Kühlung der exothermen Polymerisation, mit zunehmender Bildung von Belägen, die Kühlwassertemperatur (Manteltemperatur) Tm abgesenkt werden muss. Es wurde gefunden, dass sich mit dem erfindungsgemäßen Verfahren bei kontinuierlichem Betrieb des Reaktors die Kampagnenreichweite deutlich verlängern lässt.

### Beispiel:

Das Verfahren wurde in einem kontinuierlich betriebenem 500l-Reaktor zur Herstellung einer wässerigen mit Polyvinylalkohol stabilisierten Vinylacetat-Ethylen-Copolymer-Dispersion getestet.

Der leere und saubere Reaktor wurde mit dem Reaktormantel auf 70°C aufgeheizt. Die Reaktorinnenwände und Einbauten wurden mit 60 g einer 10 %-igen wässerigen Ascorbinsäurelösung mittels Dampf besprüht. Anschließend wurden die so vorbehandelten Reaktorinnenwände und Einbauten mit 90 g einer wässerigen Noxol-Lösung (Noxol ETH/S3 der Firma AkzoNobel) mittels Dampf besprüht. Dann wurde der Reaktor mit Stickstoff gespült und 30 Minuten bei 70°C gehalten. Diese Sequenz wurde noch einmal wiederholt. Anschließend wurde der Reaktor kontinuierlich mit den Edukten zur Polymerisation befüllt und das Produkt der Polymerisation kontinuierlich entnommen.

Nach einer Kampagnendauer von 40 Tagen war die zur Kühlung der Polymerisation erforderliche Kühlwassertemperatur Tm von 23°C auf 6°C abgefallen.

Zum Vergleich wurde eine Kampagne durchgeführt, bei der analog vorgegangen wurde, mit dem einzigen Unterschied, dass die Reaktorinnenwände und Einbauten nur mit 90 g einer wässerigen Noxol-Lösung (Noxol ETH/S3 der Firma AkzoNobel) mittels Dampf besprüht worden sind, aber keine Besprühung mit wässeriger Ascorbinsäurelösung vorgenommen wurde.

Bereits nach einer Kampagnendauer von nur 19 Tagen war die zur Kühlung der Polymerisation erforderliche Kühlwassertemperatur Tm auf 6°C abgefallen.

Dies zeigte, dass mit der erfindungsgemäßen Ansäuerung die Belagsbildung deutlich reduziert wird. Im Vergleich zu der Vorgehensweise bei der nur die wässerige Lösung des Ablagerungsverhinderungsmittels aufgetragen wurde, ließ sich mit der zusätzlichen Ansäuerung der Reaktorinnenwände der Reinigungsaufwand deutlich reduzieren.

Die Reinigungsintervalle werden daher mit dem erfindungsgemäßen Verfahren länger und bei kontinuierlicher Polymerisation wird auch die Kampagnenreichweite verlängert. Bei kontinuierlich durchgeführter Polymerisation wird der tägliche Abfall der Manteltemperatur Tm (Kühlwassertemperatur) reduziert und die Kampagnenreichweite dementsprechend, ohne Abfall der Tagestonnenleistung, erhöht.

## Patentansprüche

1. Verfahren zur Polymerisation von ethylenisch ungesättigten Monomeren mittels radikalisch initiierter Emulsionspolymerisation in wässerigem Medium in einem Polymerisationsreaktor, wobei dessen Innenwände, und gegebenenfalls dessen Einbauten, vor der Befüllung des Reaktors, mittels Auftragung eines Ablagerungsverhinderungsmittel, welches bei der Behandlung mit einer Säurelösung präzipitert, beschichtet werden, **dadurch gekennzeichnet, dass** die mit Ablagerungsverhinderungsmittel zu beschichtenden Oberflächen mit einer Säurelösung behandelt werden, wobei zunächst die Säurelösung auf die zu beschichtenden Flächen aufgetragen wird und anschließend das Ablagerungsverhinderungsmittel, oder wobei zunächst das Ablagerungsverhinderungsmittel aufgetragen wird und anschließend die Säurelösung.

2. Verfahren nach Anspruch 1, **dadurch gekennzeichnet, dass** ein Ablagerungsverhinderungsmittel aus der Gruppe enthaltend Kondensationsprodukte von Formaldehyd mit Naphtolverbindungen, Kondensationsprodukte aus einer Naphtolverbindung und einem Sulfoxylat, Kondensationsprodukte aus einer Naphtolverbindung und einem Aldehyd und einer aromatischen Carbonsäure, die am aromatischen Kern hydroxyliert ist, verwendet wird.

3. Verfahren nach Anspruch 1 oder 2, **dadurch gekennzeichnet, dass** vor der Befüllung des Reaktors mit den Bestandteilen des Polymerisationsansatzes und vor und/oder nach der Applikation des Ablagerungsverhinderungsmittels, die Wände des Polymerisationsreaktors und gegebenenfalls die Einbauten des Polymerisationsreaktors, mit einer wässerigen Lösung einer anorganischen oder organischen Säure behandelt werden.

4. Verfahren nach Anspruch 1 bis 3, **dadurch gekennzeichnet, dass** eine anorganische oder organische Säure mit einem pKs-Wert von pKs < 5 verwendet wird.

5. Verfahren nach Anspruch 1 bis 4, **dadurch gekennzeichnet, dass** die wässerige Lösung des Ablagerungsverhinderungsmittels in einem Schritt oder in mehreren Schritten aufgetragen wird.

6. Verfahren nach Anspruch 1 bis 5, **dadurch gekennzeichnet, dass** die Auftragung des Ablagerungsverhinderungsmittel und/oder der wässerigen Säurelösung jeweils wiederholt wird.

7. Verfahren nach Anspruch 1 bis 6, **dadurch gekennzeichnet, dass** die Polymerisation diskontinuierlich betrieben wird.

8. Verfahren nach Anspruch 1 bis 6, **dadurch gekennzeichnet, dass** die Polymerisation kontinuierlich betrieben wird.

9. Verfahren nach Anspruch 1 bis 8, **dadurch gekennzeichnet, dass** Vinylacetat und gegebenenfalls weitere mit Vinylacetat copolymerisierbare Comonomere polymerisiert werden.

## Claims

1. Method for polymerizing ethylenically unsaturated monomers by radically initiated emulsion polymerization in aqueous medium in a polymerization reactor, where the internal walls, and optionally internals, of said reactor are coated, before the reactor is filled, by application of a scale inhibitor which precipitates on the treatment with an acid solution, **characterized in that** the surfaces to be coated with scale inhibitor are treated with an acid solution, wherein first the acid solution is applied to the areas that are to be coated, and subsequently the scale inhibitor, or wherein first the scale inhibitor is applied and subsequently the acid solution.

2. Method according to Claim 1, **characterized in that** a scale inhibitor is used from the group containing condensation products of formaldehyde with naphthol compounds, condensation products of a naphthol compound and a sulfoxylate, condensation products of a naphthol compound and an aldehyde and an aromatic carboxylic acid which is hydroxylated on the aromatic nucleus.

3. Method according to Claim 1 or 2, **characterized in that** before the reactor is filled with the constituents of the polymerization mixture and before and/or after the scale inhibitor is applied, the walls of the polymerization reactor and optionally the internals of the polymerization reactor are treated with an aqueous solution of an inorganic or organic acid.

4. Method according to Claim 1 to 3, **characterized in that** an inorganic or organic acid having a pKa of pKa < 5 is used.

5. Method according to Claim 1 to 4, **characterized in that** the aqueous solution of the scale inhibitor is applied in one step or in a plurality of steps.

6. Method according to Claim 1 to 5, **characterized in that** the application of the scale inhibitor and/or of the aqueous acid solution is repeated in each case.

7. Method according to Claim 1 to 6, **characterized in that** the polymerization is operated batchwise.

8. Method according to Claim 1 to 6, **characterized in that** the polymerization is operated continuously.

9. Method according to Claim 1 to 8, **characterized in that** vinyl acetate and optionally further comonomers copolymerizable with vinyl acetate are polymerized.

## Revendications

1. Procédé pour la polymérisation de monomères éthyléniquement insaturés par polymérisation en émulsion initiée de manière radicalaire dans un milieu aqueux dans un réacteur de polymérisation, dont les parois internes et le cas échéant les garnitures sont revêtues avant le remplissage du réacteur par application d'un agent empêchant les dépôts qui précipite lors du traitement avec une solution acide, **caractérisé en ce que** les surfaces à revêtir par un agent empêchant les dépôts sont traitées avec une solution acide, la solution acide étant d'abord appliquée sur les surfaces à revêtir et l'agent empêchant les dépôts étant ensuite appliqué ou l'agent empêchant les dépôts étant d'abord appliqué, suivi de la solution acide.

2. Procédé selon la revendication 1, **caractérisé en ce qu'**on utilise un agent empêchant les dépôts du groupe contenant les produits de condensation de formaldéhyde avec des composés naphtol, les produits de condensation d'un composé naphtol et d'un sulfoxylate, les produits de condensation d'un composé naphtol et d'un aldéhyde et d'un acide carboxylique aromatique, qui est hydroxylé sur le noyau aromatique.

3. Procédé selon la revendication 1 ou 2, **caractérisé en ce que** les parois du réacteur de polymérisation et le cas échéant les garnitures du réacteur de polymérisation sont traitées, avant le remplissage du réacteur par les constituants de la charge de polymérisation et avant et/ou après l'application de l'agent empêchant les dépôts, par une solution aqueuse d'un acide inorganique ou organique.

4. Procédé selon la revendication 1 à 3, **caractérisé en ce qu'**on utilise un acide inorganique ou organique présentant une valeur de pKa ≤ 5.

5. Procédé selon la revendication 1 à 4, **caractérisé en ce que** la solution aqueuse de l'agent empêchant les dépôts est appliquée en une étape ou en plusieurs étapes.

6. Procédé selon la revendication 1 à 5, **caractérisé en ce que** l'application de l'agent empêchant les dépôts et/ou de la solution aqueuse d'acide est à chaque fois répétée.

7. Procédé selon la revendication 1 à 6, **caractérisé en ce que** la polymérisation est réalisée de manière discontinue.

8. Procédé selon la revendication 1 à 6, **caractérisé en ce que** la polymérisation est réalisée de manière continue.

9. Procédé selon la revendication 1 à 8, **caractérisé en ce qu'**on polymérise de l'acétate de vinyle et le cas échéant d'autres comonomères copolymérisables avec l'acétate de vinyle.
